# EUROPEAN PATENT APPLICATION

(11) **EP 2 444 926 A1**
(43) Date of publication of application: **25.04.2012**
(21) Application number: 11185702.5
(22) Date of filing: 19.10.2011
(51) Int. Cl.: G06Q 20/00

(54) **Any-to-one transaction fulfilment system**

(30) Priority: 19.10.2010 US 394491 P
(71) Applicant: Wonga Technology Limited, Dublin 2 (IE)
(72) Inventor: Hurwitz, Jonty, London, NW1 7SN (GB); Damelin, Errol, London, NW1 7SN (GB)
(74) Representative: Virdee-Crofts, Kulwinder Kaur

(57) **Abstract**

There is provided, in accordance with an embodiment of the present invention, an apparatus, system, and method to provide substantially in real time personalized and/or customized consumer credit from from multiple money sources into substantially any shopping basket or facility on the Internet or on a mobile network. In one embodiment, a consumer credit provider may provide supplementary or complimentary credit to enable an online purchase, in combination with existing credit sources, in a substantially transparent way, such that the user feels that only one transaction is taking place.

## Description

### CROSS REFERENCE TO RELATED APPLICATIONS

This application claims priority from US Provisional Patent Application No. 61/394,491, filed 19 October 2010**,** entitled **"MANY-TO-ONE TRANSACTION FULFILMENT SYSTEM",** which is incorporated in its entirety herein by reference.

### FIELD OF THE INVENTION

The present invention relates in general to methods and devices useful in general to execution of payments transactions, and in particular to usage of multiple sources in executing online or mobile payment transactions.

### BACKGROUND OF THE INVENTION

Individuals typically have their available cash and credit spread over a number of different sources. By way of example, these may include one or more credit cards, debit cards, bank account, bank overdrafts, personal loans, e-wallets and prepay cards.

Currently, typical online and mobile transaction systems rely on the movement of funds from one payer money source to one payee destination. By way of example: a person may buy a travel ticket using his/her credit card. In essence, a one to one transaction between the payer money source and the payee destination.

### SUMMARY OF THE INVENTION

There is provided, in accordance with an embodiment of the present invention, an apparatus, system, and method to provide, substantially in real time, personalized and/or customized consumer credit from multiple Credit Providers, into a shopping basket or facility on the Internet or on a mobile network.

According to some embodiments, a system for facilitating the provision of personalized online credit from multiple credit sources is provided, that includes a Many-to-one Transaction Fulfillment System (MTFS), adapted to facilitate a many-to-one transaction payment online by connecting multiple money sources, online consumers, and vendor payment platforms, wherein the MTFS includes a file with instructions to execute commands to enable execution of the many to one payment transaction as substantially a single payment transaction to the vendor payment platform. The MTFS may also include a customer database, including a memory having stored thereon consumer credit related data; a Verification component, including instructions to execute commands to enable consumer credit provision verification; a Collection component, including instructions to execute commands to enable the movement of funds from the money sources to one or more system accounts; a Treasury float bank account(s) for maintaining funds for substantially real time payment to vendor payment platforms; a Money-out payment component for enabling moving of money from a MTFS account into a vendor account; and a Graphical User Interface (GUI), which is used to enable users to remotely interface with the system.In some embodiments the MTFS further includes a Credit Search feature for running instructions to acquire credit from multiple sources in order to complete a transaction. In some examples the credit provision is customizable, such that said consumer selected how to configure said provision. In still further examples the credit provision is adapted to be executed as a single payment process for the consumer to the vendor payment platform, wherein the single payment process comprises multiple partial payments optionally in the background.

In still further embodiments the credit provision may be adapted to facilitate credit product facilitation in one or more jurisdictions. Further, the credit provision may be mobile phone compatible. In still further cases, the MTFS further includes a real time loan provider system for acquiring additional credit provision substantially in real time for the many to one transaction payment.

In further embodiments, a Credit Search feature may be used for running instructions to acquire credit from multiple credit sources in order to complete a transaction. In some cases the consumer may configure the available credit, such that the transaction is executed using a combination of one or more credit sources. In a further example, the available credit is acquired using substantially a single payment process for a consumer to a vendor payment platform, wherein the single payment process includes multiple partial payments facilitated by the multiple credit sources. The above described instructions may be initiated using mobile phones, remote computing devices, wearable computers, communications devices, desktop computers, and/or data servers.

According to some embodiments, a method for facilitating the provision of personalized online credit for a transaction from multiple credit sources, is provided, including: applying to make a many-to-one transaction to a Vendor, by an online consumer, using an application provided by a Many-to-one Transaction Fulfillment System (MTFS); selecting a configuration of money sources to feed the transaction, by the online consumer; selecting the proportions each money source will contribute the transaction value, by the online consumer; requesting funds from the Money sources from the MTFS; and executing payment to the Vendor in a single transaction, by the MTFS.

In further embodiments a background check for a payment request maybe run, to ensure that funds are sufficiently likely to be available to the customer from the selected fund sources. The background check may include, for example, running one or more files with instructions to execute commands to enable managing and controlling of the flow of payments from online consumers to vendors platforms, the instructions including using system collection and/or verification components, and querying a memory having stored thereon consumer credit related data in a customer database. In other examples, a verification component may be used, that includes running instructions to execute commands to enable consumer credit provision verification, based on one or more of internal and/or external rules, criteria, and behavior. In a further example, a program or set of instructions may be executed to search for additional money sources in order to complete a transaction. In a still further example, the MTFS may execute instructions based on a consumer pre-specified payment preferences.

### BRIEF DESCRIPTION OF THE DRAWINGS

The principles and operation of the system, apparatus, and method according to the present invention may be better understood with reference to the drawings, and the following description, it being understood that these drawings are given for illustrative purposes only and are not meant to be limiting, wherein:

Figs. 1A and 1B are schematic system diagram depicting components of a many-to-one transaction fulfillment system, according to some embodiments; and

Fig. 2 is a flow diagram indicating the process by which funds are taken from multiple sources and consolidated into a consolidated transaction used in order to facilitate mobile and online payments, according to some embodiments.

### DETAILED DESCRIPTION OF THE INVENTION

The following description is presented to enable one of ordinary skill in the art to make and use the invention as provided in the context of a particular application and its requirements. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In other instances, well-known methods, procedures, and components have not been described in detail so as not to obscure the present invention.

The term "transaction" as used herein refers to the movement of money from the payer (i.e. individual client, user, institution, entity etc.) to the vendor (i.e. Product or service provider or source), via mobile, web, card, eWallet or any other available mode of moving money available. The term "Many-to-one transaction" may refer to executed online transactions that are made up of two or more sub-transactions. For example, a user may execute an online purchase, wherein the purchase may be enabled using multiple sources, funds or systems. The term "Many-to-one transaction fulfillment system" (MTFS) refers to the system, technology and/or method that consolidates multiple fund sources and facilitates a substantially single/cumulative or consolidated payment/transaction, as is described herein-below. The term "Credit Provider" may include credit facilitators, agents, banks, lenders etc. The term "Shopping Basket Vendor" may include Website operators, financial services, or other online or mobile payment facility providers, whether for online sellers of products and/or services. The term "Shopping Basket" may denote a particular section of a commercial website that allows the customer to make payment over the internet for products or services using credit cards, debit cards, prepay cards, or other payment means, such as mobile wallets, bank transfers etc. The term "plug-in" may denote a payment module, such as a GUI, cart, wallet, object, plug-in or add-on, or another program or code for enabling smart purchasing configuration by a user, in accordance with various embodiments described herein.

It would be highly advantageous to have a system or method that could enable online or mobile payment management from multiple funding sources. Non-limiting embodiments of the present invention include a system, method and/or means for facilitating online or mobile payment or transaction management from multiple funding or payment sources. In some embodiments, systems and methods are provided for enabling real-time consolidation of multiple sources of funding into a substantially single consolidated payment transaction.

There is provided, in accordance with an embodiment of the present invention, an apparatus, system, and method to provide, substantially in real time, personalized and/or customized consumer credit from multiple Credit Providers, into a shopping basket or facility on the Internet or on a mobile network.

Reference is now made to **Fig**. **1A****,** which is a schematic system diagram depicting a system for facilitating the provision of personalized credit from multiple credit sources using online or in mobile networks. The system includes a Many-to-one Transaction Fulfillment System (MTFS) 100, adapted to facilitate a many-to-one transaction payment online by connecting money-out payment component 170 with money sources 101, customers 180, and vendor platforms or shopping carts 190, where transactions are executed. The MTFS may include a file with instructions to execute commands to enable execution of the many to one payment transaction as substantially a single payment transaction to the vendor payment platform. MTFS payments are in general single payments or transactions made to a vendor, however multiple or many payments or transactions may be conducted in the background to provide for the many-to-one nature of the transaction being handled.

The MTFS includes a Money-out payment component 170, which may include a file with instructions to execute commands to enable managing and controlling of the flow of payments made to vendor platforms from online consumers. MTFS may further include customer database 150, including a memory having stored thereon consumer credit related data. MTFS may also include a Verification component 145, including instructions to execute commands to enable consumer credit provision verification, based on internal and/or external rules, criteria, behavior etc. MTFS may additionally include a Collection component 147, including instructions to execute commands to enable the movement of funds from money sources 101 to the system Treasury collection bank accounts 174. MTFS may further include Treasury float bank accounts 172, for maintaining funds for immediate or substantially real time payment to vendor payment platforms 190. Money-out payment component 170 typically enables moving of money from the MTFS Treasury float bank accounts 172 into the vendor accounts (not shown). MTFS additionally provides a payment configuration Graphical User Interface (GUI) 175, which is used to enable users to interface with the system via the Internet, Intranet or mobile network 155. GUI may include an application, plug-in, add-on, object, cart, wallet, or other program or code for enabling suitable remote access to and/or interaction with MTFS.

In some embodiments a Credit Search feature 177 communicatively coupled to Collection component 147 may be used, to implement money source searches, for example, whereby the MTFS may run instructions to survey multiple money sources in order to complete the transaction, until it finds one or more payment sources or combinations of payment sources with available funds to cover the entire transaction.

Treasury float bank accounts 174, in general, are accounts used by MTFS to fund the payment of vendors for authorized transactions, even in cases where funds have not been fully collected to support the transaction. Typically money from the customers' underlying money sources 101 may take different time intervals to clear into the MTFS Treasury collection bank accounts 174, which are typically accounts used for collecting the payment for transactions from the customer's money sources 101. For example, some money sources 101 can take up to a week or longer to actually remit money, in which case it may be the responsibility or choice of MTFS 100 to have payment funds available in the Treasury float account 172 before money is received in the MTFS Treasury collection bank accounts 174. Techniques and technologies for financing and management of the MTFS treasury and cash flow may be executed by treasury collection bank account 174 and treasury float bank accounts 172, or other suitable mechanisms or systems.

Money out payment component 170 typically operates within the Internet or mobile network cloud 155, moving money from the treasury float bank account 172 to the Vendor Payment platform, as described above. The Vendor payment platforms may include an online shopping cart, an eWallet or an interface that may accept a credit or debit card number, or other payment means. In some embodiments money out-payment component 170 may issue a card or transaction number. The Vendor payment platform may also include a vendor bank account, into which money out-payment component 170 may make the payment directly upon payment execution.

In certain cases, the Vendor may be the customer him/herself. For example, the customer may request an MTFS payment directly into their own bank account. For example, MTFS may be used as a means of consolidating various credit and cash sources into a single cash lump sum in a different account.

It is noted that from the perspective of a vendor receiving money from a customer via money-out payment component 170, a single consolidated transaction may appear. For example, there may be no visibility to the vendor of the underlying money sources 101 that constitute the transaction. In certain embodiments, the vender may be unaware of the customer him/herself. For example, the transaction on the vendors own systems may be seen to have come from the brand name of the MTFS system itself on behalf of the customer.

In still further embodiments, the MTFS system may support more and more ways of getting money to the vendor on behalf of the customer. The actual transport mechanisms for moving the money may integrate with any suitable "money moving" technologies that may be or may become available, to get the "lump sum" of money paid.

According to some embodiments, money can be made available to the customer from many different sources or combinations of sources, including debit sources, credit sources and/or other sources.

Electronic Debit Sources, as referred to herein, may refer to technologies and services that make the customers' own cash available to them. Examples of the Electronic Debit Sources 122 available to a customer of MTFS may include prepay cards 105, debit cards 110, direct bank account payments 115, eWallets 120, such as PayPal, or other suitable sources.

Electronic Credit Sources, as referred to herein, make refer to additional sources of credit available to the customer. Examples of Electronic Credit Sources 125 available to a customer of MTFS may include credit card vendors 130, bank overdraft facilities 135, electronic loan facilities 140, or other suitable sources. Of course, many other cash supply sources and/or loan supply sources may be used to implement electronic loans or funds.

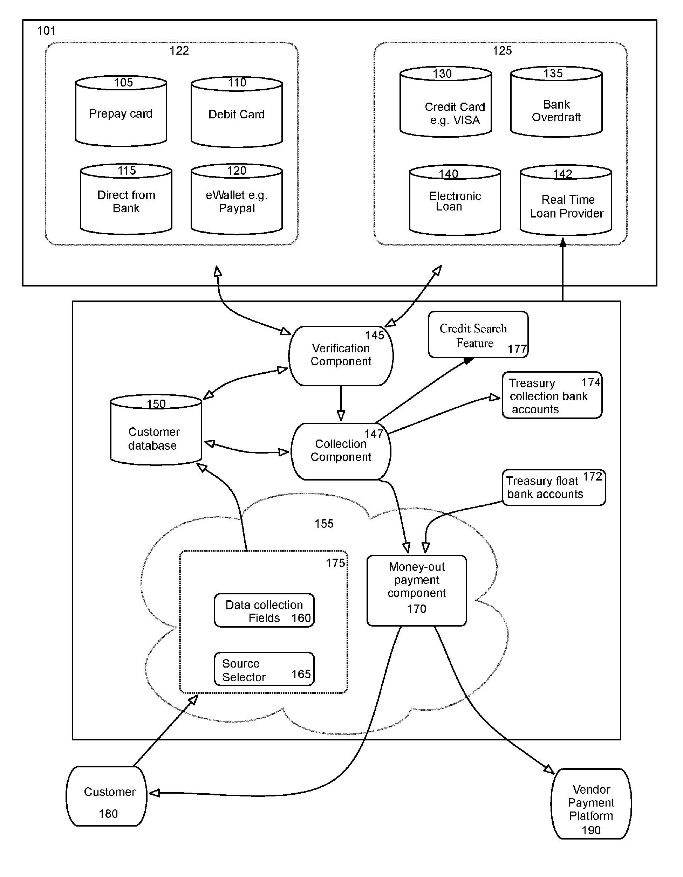

Reference is now made to **Fig. 1B****,** wherein, according to some embodiments, in the case where sufficient funds are not available from one or more of the requested fund sources, MTFS may communicate with a real time loan provider system 142, such as loan provision system of Wonga.com or other online credit suppliers, to request an updated loan request, whereby the real time loan source may conduct a substantially real time loan acquisition procedure to cover the requested or remaining funds for the purchase. Such a real time loan provider may include entities, beyond standard credit lines such as credit cards and banks, which have loan funds available for lending, in accordance with rules and criteria defined by such funds. Such a loan request, if granted, may pay for at least a part of the funds needed for the current purchase in accordance with the new calculation of the respective fund sources to be used. In the example above, if the ticket buyer could only receive $10 from his PayPal or other online payment account, and so was short of $30, it may be that Wonga.com agrees to supply the extra $30, thereby the final payment for the ticket would be made up from: $40 from his Barclays credit card, $20 directly from his bank account, $10 from PayPal and $30 from Wonga.com. The total MTFS payment would be $100.

In an additional example, once the ticket buyer requests to make a purchase of the $100 ticket, the plug-in may be activated to present to the user the various options of payment sources from which to execute the payment, such as one or more of PayPal, eWallet, bank or credit card account, or online loan source etc. In some cases, the plug-in may present balances available for payment from each of the available payment sources, for example, there may be only $10 available through PayPal, $40 from a credit card, $20 from a bank account, and $30 from a debit card. In such a case, the user may have to choose all the available payment sources to cover the purchase, and may therefore configure the payment such that $40 is paid from the users credit card, $20 directly from the users bank account, $10 from PayPal and $30 from the users debit card. The total MTFS payment would be $100. In yet a further example, the various available payment sources may together be short of the purchase amount, however the user may be connected to an online loan provider, like Wonga.com. In the example directly above, if the user had no debit card and was short of $30, the user's loan provider may run a substantially real time loan provision check and decide to provide the balance ($30) for the purchase, in which case $40 is paid from the users credit card, $20 directly from the users bank account, $10 from PayPal and $30 from the online loan provider. Of course, in some embodiments the user may choose his or own configuration of amounts and payment sources from which to execute a purchase.

MTFS does not necessarily have any special relationship with any Money Sources 101, although such relationships may occur. The Collection and Verification Components (145 and 147) may connect to these Money Sources 101 using their published or privately available transactional protocols.MTFS may include a verification component 145, which is responsible for verifying the various Money Sources 101 that the Customer enters. In order for MTFS to work, it may require the customer to provide information to the Customer Database 150 with details of their various Money Sources. The verification component 145 may verify that the money sources entered by the customer are valid, operational and true, and/or may verify that no rules and regulations are in breach by fulfilling the transaction. The verification component 145 may also verify at the time of taking money from the money source 101 that funds are available, and/or may Keep records in the Customer database up to date, including when Money sources 101 expire, change or are blacklisted.

Verification implementations may vary from money source to money source and the Verification Component 145 may manage the communications and fraud risk associated with each individual money source. By way of example, before taking $100 from a user's Visa Card, the Verification Component may use various technologies, credit scores, and integrations to ensure that the Visa card is theirs and that it is able to make a payment of $100.

In accordance with some embodiments, MTFS may need to decide on the amount of risk that the Verification Component is willing to take in determining if funds are sufficiently likely to be remitted to MTFS from the customers' money sources. Since many of the funds sources may not operate in real time, the MTFS may need to operate a treasury system and make certain transaction payments before many of the funds from the various source funds have cleared in the MTFS treasury system. For each source of funds feeding the MTFS system, there may be differing integrations, messaging, risks and fraud technologies, each with their own latencies or other requirements. In such cases, the MTFS may need to manage these protocols and latencies and make real-time decisions about transferring the full transaction amount out of its treasury float bank accounts 172 in anticipation of the smaller transactions from the customer sources clearing.

The Collection Component 147 may handle the actual collection of funds from the customer selected Money Sources 101. Component 147 may be integrated with the various Money Sources and may have the ability to instruct them to make payments to the Treasury Collection Bank Accounts 174. At the moment that a customer requests an MTFS payment, the Verification Component 145 and the Collection Component 147 will work in symphony to instruct the moving of relevant funds from the various Money Sources into the Treasury Collection Bank Accounts 174. If these components are satisfied that the money is sufficiently likely to arrive in the Treasury Collection Bank Accounts 174, they may then immediately instruct the Money-out Payment Component 170 to make payment to the Vendor Payment Platform 190 on behalf of the customer. The Collection Component 147 and/or the Verification Component 145 may utilize external or internal risk mitigation technologies, codes, systems or algorithms. According to some embodiments, treasury collection bank accounts and/or treasury float bank accounts may not be required.

According to some embodiments, the vendors need not install any additional software or services on to their own platforms. The system may operate using existing industry standard payment platforms. For example, in one embodiment MTFS will issue a new one-time-use virtual debit card number loaded with the full transaction value which the customer will put into the checkout basket on the vendors website i.e. no need for the vendor to be involved or even aware of the customers use of MTFS technology to make up the value of the full transaction.

The payment configuration Graphical User Interface (GUI) 175, which may include a window, object, application, plug-in, ewallet, shopping cart etc., may be platform independent and may operate both online via web clients and on mobile devices. GUI 175 may enable a user, via Data Collections Fields 160, to specify the range of Money Sources available to the customer. This may include, by way of example, one or more bank accounts (optionally with associated debit cards), one or more credit cards, and/or one or more eWallets (e.g. Money-bookers). The customer, independent of MTFS, may have formed these relationships and may simply provide MTFS with the necessary details (as prompted by MTFS) to facilitate the operation of the Verification Component 145 and the Collection Component 147.

Accordingly, the customer may use GUI 175 to provide details like credit card and bank fields to the system, which will be subsequently stored in customer database 150 so that for future transactions, the customer may not necessarily need to re-enter similar data, but may merely use Source Selector 165 to select source proportions or preferences etc.

In some embodiments, the Data Collection Fields 160 module may be able to assemble certain data without customer intervention, thereby using the GUI to request user input on a needs only basis.

The GUI may furthermore, at the time of requesting a many-to-one transaction, enable the user to specify the proportions to attribute to the various money sources 101 that he/she wishes to constitute the transaction. This function may be offered by the Source Selector 165. By example in a 'User Story': for this $600 transaction, I would like to take $200 from Visa Card 1, $300 from MasterCard 2 and $100 from my Paypal Account. A further embodiment of the Source Selector may be the ability of customer 180 to nominate via his/her preferences the 'pecking order' of Money Sources. Indicating to the Collection Service 147 that if a particular Money Source has insufficient funds to facilitate its proportion of the transaction, that the Collection Service 147 should attempt from a secondary money source. The GUI may subsequently communicate the information back to the Customer Database 150, thereby allowing the other relevant system components to facilitate the many-to-one transaction.

It is important to note that in some embodiments, the GUI may not be required, and in further embodiments, use of the GUI may be optional. For example, if a customer has pre-configured and pre-requested certain regular transactions then it may be that MTFS can facilitate a transaction with no (or negligible) user interfacing. Examples may include a mortgage repayment, which would be a relatively large monthly transaction requiring multiple money sources to make up the full amount.

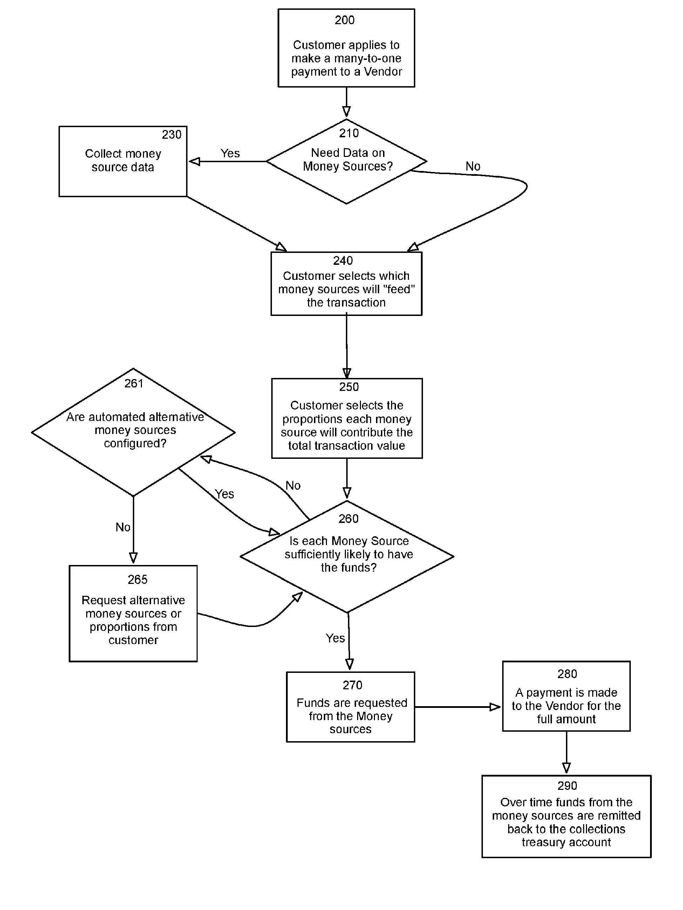

Reference is now made to **Fig. 2****,** which is a flow diagram indicating the process by which funds are taken from multiple sources and consolidated into a single larger transaction used in order to facilitate real-time "larger" payments, according to some embodiments. As can be seen in the figure, at block 200, the customer applies to make a many-to-one payment to a payee, for example, at an online store, using an application or program provided by the MTFS. At block 210, the request is channeled via the customer database to identify whether further data is required in order to proceed. In the case where additional data may be required, the system may require of the user to enter data such as: Is this a new customer; Are any of the customers Money Sources cancelled or invalidated; Is any data relating to the customer or money sources out of date (e.g., this may include address changes or changes to credit card credentials) etc.

At block 230, the data required by MTFS may be requested from the customer via a user interface, for example an object, window or application. The customer may need to provide information on any number of areas ranging from personal identity to his/her sources of money, thereby allowing the Customer Database to get updated information behind the scenes. At block 240, when the MTFS has the relevant updated customer money source information, the customer may select, via a user interface, which money sources may be used to "feed" the many-to-one transaction. Optionally, at block 250, the customer may select (or update the default settings of) the amounts each source is to contribute to the total transaction. In other embodiments, where the customer has previously provided general preferences, which may be used for transactions, then MTFS may determine the composition of the transaction without requiring customer input at 240 and/or 250.

At block 260, once MTFS knows or has acquired the requested composition of the transaction, various checks may be done in the background, to ensure that funds are sufficiently likely to be available to the customer from the selected fund sources. For example, one or more files with instructions to execute commands to enable managing and controlling of the flow of payments from online consumers to vendors platforms may be run. Instructions may include using the collection and/or verification components, and /or querying a memory having stored thereon consumer credit related data in the customer database. The Verification component may execute instructions to execute commands to enable consumer credit provision verification, based on internal and/or external rules, criteria, behavior etc. If MTFS determines that there are not sufficient funds available from one or more money sources, the system may stop or postpone the transaction, or in 261, the system may attempt to extract funds from alternative money sources provided by the customer, or in other configurations.

According to certain embodiments, the MTFS may run a program or set of instructions to search a credit search feature to implement payments, for example, to survey multiple money sources in order to complete the transaction, until it finds a combination of sources with available funds to cover the entire transaction, optionally as requested by the consumer. In some embodiments, if the user requested combination cannot be provided, the system may suggest alternative combinations of sources and/or amounts to be used to execute a required transaction.

Further, in some cases, the customer may provide the MTFS system with preferences such as priorities of sources from which to extract payments. In one example, the customer may select their bank account to be sourced first, but if no money is available then the customer's credit card source should be sourced to make up the balance of the transaction. In this way, the customer may be able to pre-determine preferred sources or orders of sources to be used in substantially real time payment of transactions. It is noted that the various money sources may be associated with the user and/or transaction, thereby enabling transaction coordination, tracking, handling and management.

If alternative money sources are not available or not deemed viable then in 265 the customer may be asked via a user interface re-enter data in various ways, for example, by providing information on additional alternative money sources, and/or by adjusting the proportions selected in 250 to take into account available funds in the various money sources. In such cases, the flow then returns to 260 to re-verify the new configuration of the proposed many-to-one transaction. Once verified, the MTFS requests and optionally requests funds from the relevant money sources underlying this transaction, at block 270. In some cases each sub transaction with each money source may be conducted by the system as independent transactions, however the various sub transactions connected to the primary online transaction may be associated with each other and/or with the consumer, to provide effective transaction execution, tracking, collection and management.

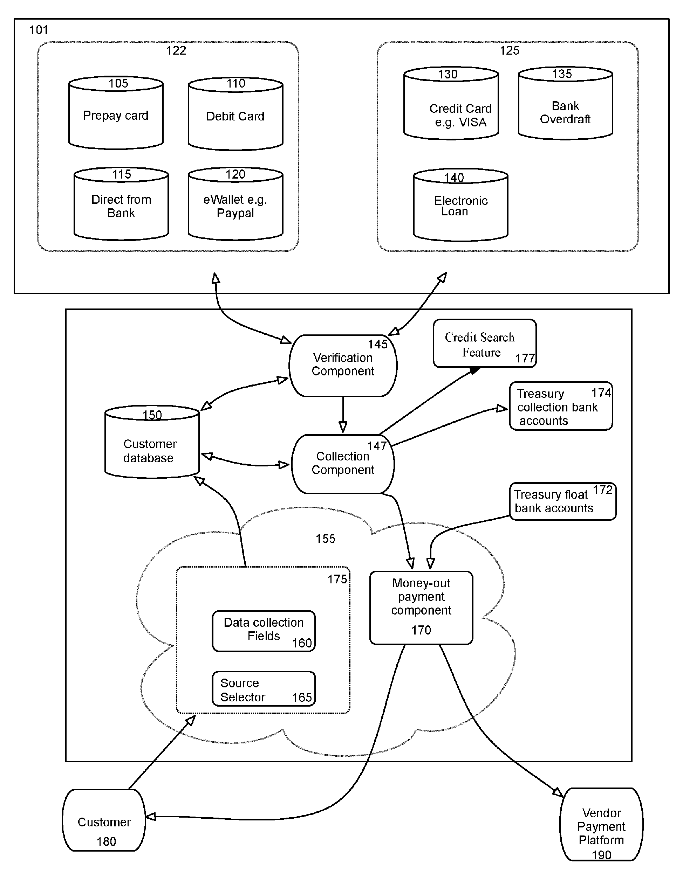

At block 280 the payment may be executed to the vendor or payee for the full amount in a single transaction authorized by the MTFS. The actual payment made to the payee may be a single transaction or may be made of multiple transactions that may appear to the customer as substantially a single transaction. Finally at 290, funds are eventually remitted from the underlying money sources into the Treasury Collection Bank Accounts. Although as covered in Fig. 1 these may take substantially longer to arrive than the time it takes for MTFS to actually remit the funds to the Vendor. It is noted that the various partial or sub-transactions may be tracked, managed, and otherwise consolidated by the system to ensure execution.

According to some embodiments, a customer may make transactions to him/her self from one or more money sources, using the MTFS. For example, a customer may request payment to their own bank account from one or more money sources, by entering in such preferences or requests in the Source Selector. In some embodiments, payments may be requested from one or more real time loan providers, such as loan provision system of Wonga.com or other online credit suppliers, to request an updated loan request, whereby the real time loan source may conduct a substantially real time loan acquisition procedure to cover the requested or remaining funds for the purchase.

The foregoing description of the embodiments of the invention has been presented for the purposes of illustration and description. It is not intended to be exhaustive or to limit the invention to the precise form disclosed. It should be appreciated by persons skilled in the art that many modifications, variations, substitutions, changes, and equivalents are possible in light of the above teaching. It is, therefore, to be understood that the appended claims are intended to cover all such modifications and changes as fall within the true spirit of the invention.

## Claims

1. A system for facilitating the provision of personalized online credit from multiple credit sources, comprising:
a Many-to-one Transaction Fulfillment System (MTFS), adapted to facilitate a many-to-one transaction payment online by connecting multiple money sources, online consumers, and vendor payment platforms, wherein said MTFS includes a file with instructions to execute commands to enable execution of said many to one payment transaction as substantially a single payment transaction to said vendor payment platform.

2. The system of claim 1, where said MTFS includes a customer database, including a memory having stored thereon consumer credit related data.

3. The system of claim 1, where said MTFS includes a Verification component, including instructions to execute commands to enable consumer credit provision verification.

4. The system of claim 1, where said MTFS includes a Collection component, including instructions to execute commands to enable the movement of funds from said money sources to one or more system accounts.

5. The system of claim 1, wherein said MTFS further includes a Treasury float bank accounts for maintaining funds for substantially real time payment to vendor payment platforms.

6. The system of claim 1, wherein said MTFS further includes a Money-out payment component for enabling moving of money from a MTFS account into a vendor account.

7. The system of claim 1, wherein said MTFS further includes a Graphical User Interface (GUI), which is used to enable users to remotely interface with the system.

8. The system of claim 1, wherein said MTFS further includes a Credit Search feature for running instructions to acquire credit from multiple credit sources in order to complete a transaction.

9. The system of claim 8, wherein a consumer may configure said available credit, such that said transaction is executed using a combination of one or more credit source.

10. The system of claim 9, wherein said available credit is acquired using substantially a single payment process for said consumer to said vendor payment platform, wherein said single payment process comprises multiple partial payments facilitated by said multiple credit sources.

11. The system of claim 8, wherein said credit is adapted to facilitate credit product facilitation in one or more jurisdictions.

12. The system of claim 8, wherein said instructions are initiated using means selected from the group consisting of mobile phones, remote computing devices, wearable computers, communications devices, desktop computers, and data servers.

13. The system of claim 1, wherein said MTFS is in communication with a real time loan provider system, for acquiring additional credit provision substantially in real time for said many to one transaction payment.

14. The system of claim 1, wherein said system is adapted to facilitate the provision of personalized online credit for a transaction from multiple credit sources, by running a background check for a payment request, to ensure that funds are sufficiently likely to be available to the customer from the selected fund sources, wherein said background check may include running one or more files with instructions to execute commands to enable managing and controlling of the flow of payments from online consumers to vendors platforms, said instructions including using system collection and/or verification components, and querying a memory having stored thereon consumer credit related data in a customer database.
